# EUROPEAN PATENT APPLICATION

(11) **EP 1 113 669 A2**
(43) Date of publication of application: **04.07.2001**
(21) Application number: 00660245.2
(22) Date of filing: 28.12.2000
(51) Int. Cl.: H04N 7/24, H04L 29/06

(54) **Real-time communication of sporting event**

(30) Priority: 30.12.1999 US 475758
(71) Applicant: Nokia Corporation, 02150 Espoo (FI)
(72) Inventor: Koskelainen, Petri, 33210 Tampere (FI)
(74) Representative: Johansson, Folke Anders

(57) **Abstract**

A system and method of providing a real-time graphical representation of a sporting event to a viewer at a remote location transmits data generated in accordance with the event to the remote location. Information is captured concerning the location and motion of a plurality of objects in the sporting event. The captured information is analyzed and a data signal describing the location and motion of said plurality of objects in the sporting event is generated. The data signal is transported to the remote location via a low bandwidth communication link. A graphical representation of the sporting event is displayed at the remote location in accordance with the transported data signal.

## Description

### Field of the Invention

This invention relates generally to methods and systems for providing communications of graphical information. A particular aspect of the present invention relates to a communications method and system for providing a real-time graphical display of a sporting event.

### Description of the Related Art

Various communication networks are able to display the status of sporting events to persons at different remote locations. For example, conventional television broadcasting provides a detailed picture of the event, but requires a large amount of bandwidth. It is also expensive to broadcast a sporting event via television because the cameras have to be carefully positioned and adjusted for viewing angles, lighting conditions, etc. Video can be transmitted in real-time (streamed) over the Internet, but requires remote viewers to have access at speeds much greater than the 56 kbps achieved by V.90 compliant modems, which is not generally available and is especially not available in wireless communicationnetworks. Internet video also has poor overall quality because of the high degree of data compression that is necessary. Most compression algorithms attempt to meet the bandwidth limitations by providing a video signal of reduced resolution and/or refresh rate. The high amount of motion in sporting events presents substantial problems for highly motion adaptive video compression algorithms. Thus the video compression algorithm, as well as the TCP/IP protocols used in the Internet, frequently results in dropped frames or a refresh rate that does not permit the display of continuous motion desired for sporting events. These disadvantages can be especially frustrating to viewers if they occur at portions of extreme interest in the event (such as when a score is made), but they are inherent in compressed video streams derived from television signals.

Some web pages and text services (such as GSM SMS) provide continuous textual updates on the status of sporting events. In addition to the score, the status information sometimes includes details such as penalties (in hockey) or bookings (in soccer), the amount of time remaining in the event or current portion of the event, which team has possession of the ball and at what location on the field. These text-based services have the disadvantages that they do not allow a graphical or video representation of the event in which the location and motion of individual players can be shown, that they provide only a limited amount of information and that there is typically a delay between the updates of these services.

Some websites (i.e., www.virtualive.com and www.abcmnf.com) provide VRML-like three-dimensional modeling of a portion of the event which is presented to a viewer after the event has ended. For example, the actions of a few players for a key play or score can be modeled and later shown to a remote viewer. Such solutions have the disadvantages that they are computationally intensive (especially for fast motion sporting events) and thus cannot be done in real-time, require a lot of bandwidth for transmission or computer resources to conduct the modeling in the equipment of the remote viewer, and cannot be done for a large period of time even if they are presented after the event has ended. The three dimensional model also tends to show only some players of the players involved in the key play or score.

Consequently, the conventional methods and systems of presenting a sporting event to a remote viewer have a problem of how to send a real-time graphical representation of the event in a low bandwidth connection so that the remote viewer can see what happens in a key play or score without delay. There is also the problem-of providing the real-time location and motion of the ball and of each- player in conventional low bandwidth methods and systems. Therefore, it is desirable to provide a low bandwidth system and method in which a sporting event can be graphically presented to remote viewers in real-time.

### BRIEF SUMMARY

The present invention thus addresses conventional methods and systems which are disadvantageous for at least the reasons recognized above. In particular, the present invention is directed to a method and system for providing a graphical display of a sporting event in real-time over a low bandwidth communication channel. The present invention also allows those viewers at remote locations to view the location and motion of players in the event.

An exemplary embodiment of the present invention is directed to a system and method of providing a real-time graphical representation of a sporting event to a viewer at a remote location that transmits data generated in accordance with the event to the remote location. Information is captured concerning the location and motion of a plurality of objects in the sporting event. The captured information is analyzed and a data signal describing the location and motion of said plurality of objects in the sporting event is generated. The data signal is transported to the remote location via a low bandwidth communication link. A graphical representation of the sporting event is displayed at the remote location in accordance with the transported data signal.

### BRIEF DESCRIPTION OF THE DRAWINGS

Fig. 1 is a generalized block diagram illustrating the major elements of a real-time sporting event communication system according to an example embodiment of the invention.

Fig. 2 is an illustration of the mini-packets generated and transmitted in the example embodiment shown in Fig. 1.

Fig. 3 shows a possible display in the example embodiment shown in Fig. 1.

### DETAILED DESCRIPTION

The foregoing and a better understanding of the present invention will become apparent from the following detailed description of example embodiments and the claims when read in connection with the accompanying drawings, all forming a part of the disclosure of the invention. While the foregoing and following written and illustrated disclosure focuses on disclosing example embodiments of the invention, it should be clearly understood that the same is by way of illustration and example only and is not to be taken by way of limitation, the spirit and scope of the present invention being limited only by the terms of the claims in the patent issuing from this application.

An exemplary embodiment of the present invention seeks to have a graphical representation of a sporting event displayed to a person at a remote location over a wireless communication link. One possible application of the exemplary embodiment of the invention is to a soccer match in which the position and motion of the players and the ball is provided to a person at a remote location over a communication link of 56 kbps or less. The players and ball are represented as two dimensional symbols or more complex three dimensional virtual objects. The location (and motion) of each player (or mot important players) is updated in real-time by sending new co-ordinates or motion vectors. It is also possible to send the posture of the players to indicate their action, such as a header or other shot. The ball (or puck in hockey) is displayed in similar fashion to the players except that the height of the ball is provided instead of posture. The display can be controlled by the person at the remote location in order to concentrate attention on a player of interest.

The invention of course is not limited to such exemplary embodiment. It is more broadly directed to a diverse set of different methods and system for providing a graphical representation of an event to a person at a remote location over a low bandwidth communication link.

### Sporting Event Communication System

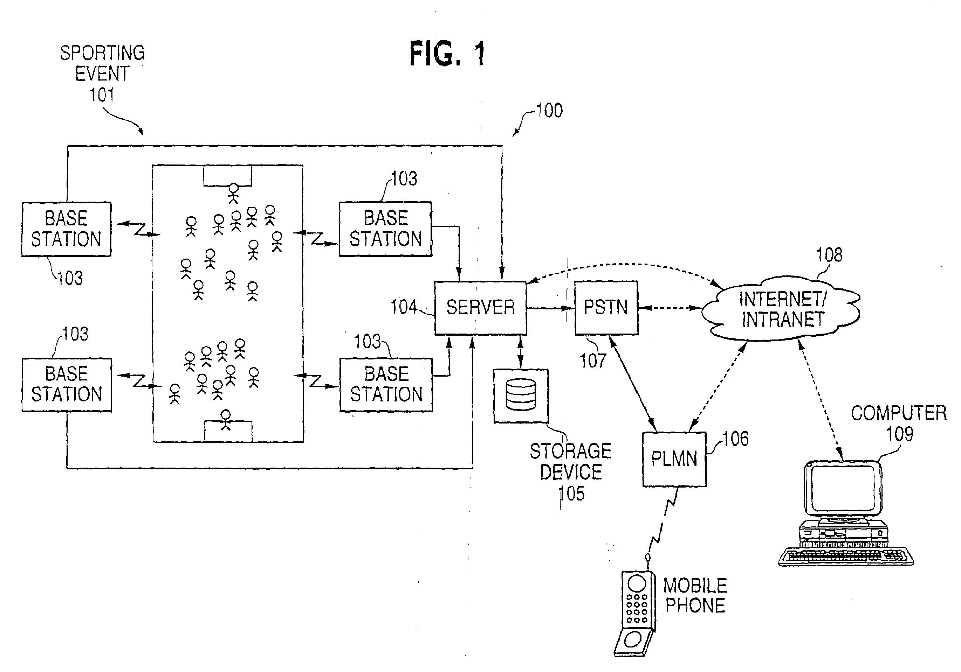

As shown in the example of Fig. 1, a communication system 100 has a sporting event location 101 in which there are a plurality of different sensors 102₁ - 102ₙ for tracking the location of the ball and of each player. Each one of the players and the ball could be matched with a corresponding one of lightweight sensors 102₁ - 102ₙ used to recognize and track their respective location. For example, the players could have the sensors 102₁ - 102ₙ included in or on their shirt or jersey. One or more base stations 103 for the sensors 102₁ - 102ₙ, are provided at the location 101. The remote tracking can be accomplished by triangulation of transmitted signals in a manner similar to GPS (Global Positioning System) or other similar technique. The tracking information is captured and collected from the sensors and stored at base stations 103 at location 101. Alternatively, the base stations 103 may just function as tracking devices, with the tracking information stored instead at server 104 at location 101. In either case, a storage table maintains the correspondence between object name/number and tracks the location and motion of each object.

In an alternative embodiment, the location of the players and the ball are estimated by analyzing the video signais from one or more conventional video cameras. The video cameras may be of any suitable type. Advanced image analysis techniques can identify each player by jersey number or some other pattern-matching algorithm (comparing the image of each player with a previously captured still image). There may also be an initialization routine at the beginning of a match where each player is separated out from others and a person knowing the identity of each player enters their identification manually. Once each player is identified, their location is matched using known techniques. For example, highly reflective material can be included on the clothing of each player as known to those in the art.

In addition to location and motion tracking, an embodiment of the invention may also match and map the posture of each player. For example, several sensors could be put on the players, such as on both legs, hands, shirt, and shoes, etc., or the posture matching could be based on a video image. A database is provided at location 101. It compares the database objects and the video images and takes the best match (or uses the previous posture and moves it based on some intelligent motion-estimation algorithm). Since the video viewing angle varies, a three-dimensional mapping is needed.

Preferably, both location tracking and posture matching are carried out in three-dimensions in order to best represent the action-of the sporting event. In most cases, the best quality is achieved doing a high-quality location tracking system together with a video image. By combining these two, it is possible to start transmission or to save the data for later use. However, because of the computational resources required to carry out the posture matching in three dimensions, it may not be fully utilized as desired in some applications of the example embodiment.

In the exemplary embodiment, a server 104 is provided at the location 101 to analyze the captured information, store it locally, and transmit a data signal generated from it to remote locations. The data signal can be forwarded to a recording device 105, forwarded to an external feed 106, or split and forwarded to both. Although the server 104 is constantly generating a data signal in the exemplary embodiment, it may alternatively be activated in response to a control signal. The data signal has a format as described below, but may be of another format presently existing or hereinafter developed for graphical displays.

As used in this application, the term graphical display includes displays having only pictorial information as well as displays having both pictorial information and audio corresponding in time with the pictorial information. The audio may be either speech (commentary) or voice (e.g., background noise of sporting event) using normal digital speech compression methods such as G.723.1. In a preferred embodiment, the voice is represented by one of a limited set of predefined symbols. The voices used in conjunction with a display are selected from a database and played at the remote location according to the transferred symbols and heuristics.

The data signal can be immediately transferred out to a user over any one of a number of different distribution systems as discussed below in the Transmission of Data Signal section. Alternatively, the data signal can be buffered locally (in location 101) for later transfer to a distribution system. In the case of a data signal with associated audio, the audio information is preferably interleaved with the pictorial information into a single bitstream.

### Data Signal Generation

In the exemplary embodiment, the data signal is very bandwidth efficient so that the bit rate is less than 56 kbps since many of the transmission channels are narrowband channels with low bit rates. For example, internet connections are usually limited to about 56 kilobits per second. The data signal will preferably be able to support graphical display screens of different re-solutions in remote viewer equipment and a frame rate greater than 15 Hz.

The exemplary embodiment uses standard Real-Time Protocol (RAP) or other similar protocol format having tight timing control enabling real-time support, time stamps, sequencing numbers and RTP Control Protocol (TCP). Packet losses and delays can be detected and corrected using the sequencing numbers and timestamps. RTCP is used for optional control purposes.

A packet according to the exemplary embodiment will have a time stamp associated with it and include one or more 32-bit mini-packets. The total number of mini-packets is varied according to the bitrate of the communication link to the remote location. One mini-packet defines all of the necessary information for one object,(player, baii, etc.). Typically this information consists of the location, motion and posture of one player.

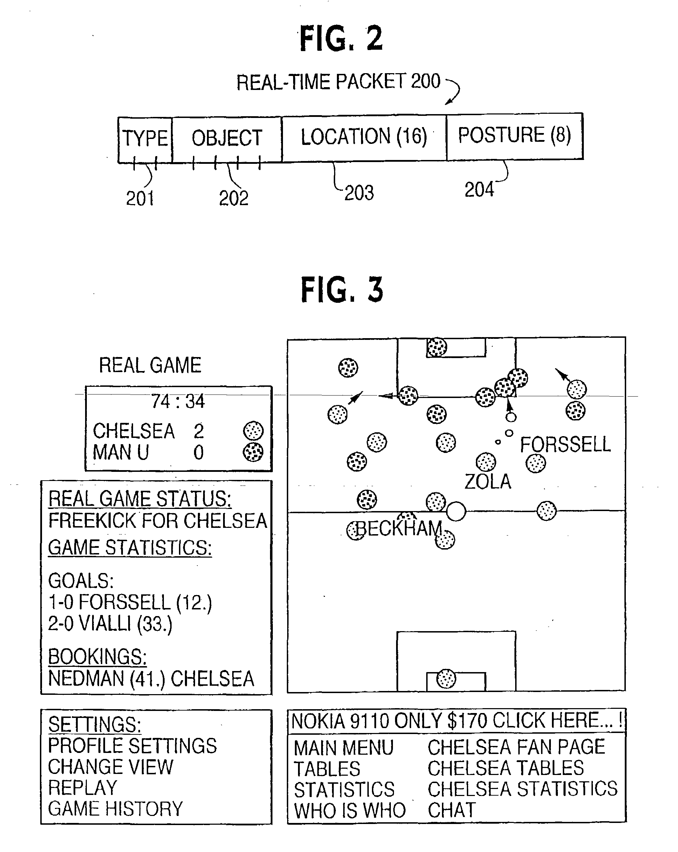

The structure of the mini-packets is shown in Fig. 2. The first three bits (201) in each mini-packet 200 identifies the type of the mini-packet and the bit format of the rest of the miniPacket. If it is type 1, then the rest of the mini-packet has the following structure. The next five bits (202) identify one of up to 32 different objects and the remainder of the mini-packet provides infomation unique to the identified object. The next 16 bits (203) give the exact location of the identified object. Preferably, the field is divided beforehand into different areas and the location bits define one of the areas. The final 8 bits (204) depict the posture of the player or height of the ball. The 256 different postures are stored in a database and matched as described above.

Of course, the above packet structure can be different for type 1 packets. For example, the location may be represented by 20 bits and the posture by 4 bits, etc. Other types of packets can also be defined differently. For example, other packets may 1) provide additional game information (facts, scorers, number of spectators, etc.); 2) deliver banners or commercial messages; 3) be encrypted; 4) be compressed; or 5) contain audio (speech commentary, background noise or animated noise).

Although the data signal generation process at location 101 is somewhat computationally intensive, the decoding process in the remote location at the receiving end of the transmission is much less intensive and amenable to devices, such as mobile phones, with relatively low computational power.

### Data Server

A variety of arrangements can be made for generating the data signal at sporting event location 101. In the exemplary embodiment, the signal is continuously generated and transmitted in real-time by server 104. Alternatively, server 104 stores the data signal in a database and then provides it for later transmission in response to control signals from location 101. Such an embodiment may be used for baseball, football or other sporting matches in which the action is not continuous as in soccer or hockey. Whenever a packet of the data signal is transferred by the server as described below, data indicating the time of the information in the packet and the correspondence between packets of the data signal is included in the data signal.

The server is preferably a dedicated data server capable of RTP transmission over UDP transport protocols. Transport may be carried out using unicast or multicast UDP. An HTTP-based web page is not appropriate since updating the page tens of times per second is not realistic because of TCP features in repeating dropped packets. In the case of UDP, the server packetizes the data signal as described above in order to enable recovery from packet losses during wireless transmission. The server can preferably adjust the data signal (by changing the number of minipackets) to best suit the available network bandwidth and avoid congestion and loss of data in any particular connection. In particular, as explained below the server supports a variety of controls over the part of the data signal transmitted utilizing fast-forward and fast-rewind operations. The server may support real-time streaming of the data as well as store and forward serving of data. Preferably, the server utilizes a buffer for temporarily storing the most recent portion of the data signal received from camera 104. In response to a control signal, the buffered data signal can be transmitted more quickly than a data signal stored in a large capacity database. Alternatively, the terminal equipment at the remote location may include storage media and save the most recent data signal upon receipt. The remote viewer can then replay an interesting portion of the sporting event if they wish.

The data server 104 can optionally send higher rate data by, for example, using layered (hierarchical) multicast delivery in which player location and posture is sent coarsely (e.g., every fifth sample of each player) in a base multicast layer and other information (other four location and posture samples of five) are sent to one or more enhancement multicast layers. By using this scheme, it is possible for a very low-bandwidth user to subscribe only to the base layer while high bandwidth users may subscribe to all layers thus having a high-fidelity display of the match. Different Quality of Service (QOS) classes may also be applied for each multicast or unicast layer. Another option is that the data server 104 selects only the most important players and sends only their location and posture information. This can be combined with the layered scheme so that only the location and posture information of the most important players (e.g. who are nearest to the ball) is sent to base multicast layers while other information is sent to enhancement layers. Different layers can be marked with different QoS values in order to protect most important data better than other data.

### Transmission of Data Signal

The data signal from server 104 at location 101 can be provided in a known manner over a conventional distribution system (only some elements of the network are shown in Fig. 1 for the sake of simplicity) such as the public service telephone network (PSTN) 107. Alternatively, the switching system can have some intelligence and functionality built into it for performing the functions of the data server. The data signal can be transferred between PSTN 107 and a mobile phone via public land mobile network (PLMN) 106. A wireless link can be established in a known manner between PLMN 106 and a mobile phone to forward the data signal to the mobile phone.

The data signal from server 104 can be transmitted by any number of different distribution systems, either currently existing or as hereafter developed. The data signal can be forwarded, for example, directly from server 104 to the Internet or an intranet 108 and then directly from there to the mobile phone-using underlying PLMN link 106. In such a case, the data transport can utilize UDP/IP protocols all the way from server 104 to the mobile phone. Alternatively, the data signal may be transferred indirectly from server 104 to the Internet 108 via PSTN 107 or may be transferred indirectly from Internet 108 to the mobile phone via PSTN 107.

Of course, Fig. 1 is only an example of the distribution systems which can be used for transferring the data signal and others distribution systems are possible. Other kinds of networks, most notably digital TV and radio networks such as DVB, DAB (including variants of DVB-S, DVB-T and DVB-C), etc. Such a network could transmit the data signal to a set-top box (or similar device) operated in conjunction with a television or video monitor using terrestial or satellite feeds, cable modem, or digital subscriber line (DSL). The data signal may be broadcast, and possibly scrambled to avoid interception by unauthorized users, in a manner already established in the network. Because of the small bandwidth of the data signals, hundreds of the data signals according to the invention could be transmitted in place of a single MPEG-2 video stream normally transmitted in such networks. Alternatively, the data signal could be transmitted over a teletext or other available low bandwidth data channel.

Similarly, while a mobile phone and computer are shown in Fig. 1, any other suitable devices, either presently existing or hereafter developed, may be utilized to receive and display the video. As discussed herein, the client can be a standalone, dedicated, device or can have the functionality embedded within other communications technology such as a web browser.

In the exemplary embodiment using a server at location 101, the stationary computer or mobile phone can interact with the server using client-server connections. In a PSTN network, the connections are conventional point-to-point switched connections. The data transmission can be started using signaling protocols like Session Initiation Protocol (SIP is a two-way signaling protocol used to request and modify the data stream) or web form. After initial signaling, the data transmission can start. The client (computer, mobile phone, or other suitable device) can control some operations of server 104 using same signaling (e.g., SIP or web form). The client can, for example, control some parameters of the connection, such as bit rate, degree of error correction, etc.

In particular, in the exemplary embodiment, the server is configured to allow each respective client to designate parameters of the connection in order to optimize the communication link to compensate for the communication medium. For example, the exemplary embodiment of Fig. 1 shows an internet connection to a computer and wireless connection to a mobile station. Signals can be sent from the computer to the switching system, either directly as shown in the exemplary embodiment of Fig. 1, or through Internet 108. Each of these communication links have significantly different characteristics and the video transmission is controlled accordingly.

The bandwidth used in a transmission depends on the remote viewer selection in the signaling phase. The bit rate can vary on a temporary basis. The peak rate is agreed in the signaling phase. It is easy to adapt the bitrate in the case of fast action using more coarse resolution(updating location information less frequently or skipping non-important players for awhile). It is possible to present even fast shots. For example, if there is a shot which has an average speed of 27 m/s, the distance is 13 meters and the field is divided into 25x25 cm blocks, it takes 5 about 0.5 seconds and it travels through about 52 blocks. The temporary packet rate would be 104 packets/second, which means that the/peak rate would be about 6 kbps (in the small packet size having two objects in one minipacket).

In a typical scenario, the packet rate is about 40 packets/second and the packet size is about 30 bytes. This means that the total bit rate is about 10 kbps. Together with IP/UDP/RTP headers, this bitrate almost doubles, but at least in wireless links it is possible to use RTP header compression which eliminates most of the IP/UDP/RTP overhead. In on the other hand, packet losses can also be compensated by adding error protection (e.g., redundancy, forward error correction) to the data signal.

### Internet Video Transmission

The internet typically uses transmission control protocol (TCP) transport layer in which packets dropped during transmission are retransmitted. Thus, a client receiving the data signal via the internet must deal with the fact that the channel throughput may be highly variable due to TCP packet retransmission. The data signal can either be entirely downloaded first and then displayed, displayed after some buffering is done to control the transmission rate, or streamed despite errors, dropped frames, or pauses in the data display.

UDP introduces relatively stable throughput, but also the possibility of packet losses. Consequently, the client must be able to recover from packet losses and possibly conceal the lost .video content. Despite the concealment, the quality of the reconstructed data suffers somewhat. On the other hand, the playback of the clip is likely to happen in real-time without annoying pauses.
The client terminal may consist of a personal computer (PC). It should be capable of communicating with the server through the internet and over a network such as, for example, the public service telephone network (PSTN).

### Wireless Data Transmission

Communication links in wireless cellular networks can experience high amounts of error, loss of signal strength, etc., not found.in wired networks. In addition to historically low bit rates for data communication, these disadvantages have conventionally rendered data transmission in a wireless cellular network a practical impossibility. However, newly developed networks With as the Global System for Mobile Communications (GSM phase 2+ in Europe and the Universal Mobile Telecommunication System (UMTS) have increased the data rates to such an extent that the quality of data signals can be made acceptable. Data transmission can be carried out using, for example, High-Speed Circuit Switched Data (HSCSD) and General Packet Radio Services (GPRS).

HSCSD offers two basic connection types, namely transparent and non-transparent, distinguished by their way of correcting transmission errors. In a transparent connection, error correction is done entirely by a forward error correction mechanism. Consequently, the available throughput is constant and the transmission delay is fixed, but the transmitted data are likely to contain bit inversion errors. The non-transparent approach is disfavored since it uses the Radio Link Protocol (RLP) to provide retransmission in case of detected errors in the receiving end. Consequently, although a non-transparent connection is error free, throughput and transmission delay is varying.

UDP over transparent HSCSD introduces bit errors in addition to possible packet losses. However, UDP can detect and indicate these bit errors. The erroneous packets can then be discarded in the receiving end. However, the decoders might utilize the erroneous data in concealment and it might be worthwhile to try to decode the erroneous packets, too. UDP over non-transparent HSCSD is free of bit errors but introduces varying delay due to retransmission. Thus, this approach is likely to perform worse than UDP over transparent HSCSD.

GPRS is a packet switched data service. It provides multiple Quality of Service (QoS) levels with varying service reliability and more optimal network usage than in HSCSD. This enables flexible support for connections of different parameters. For example, the data signal could be transmitted with various layers of error protection and delay. The data signal can be sent to each remote location using IP unicast, or it can be sent to larger groups of remote locations using IP multicast. Also layered multicast transmission is possible as described above.

### Receiving Equipment Client

Although the equipment at all remote locations receive the same information (except if they have subscribed into different multicast groups), it is possible to show personalized views, based on the user's wishes. Also, Quality of Service (QoS) schemes (DiffServ, RSVP) can be used to prioritize certain information (e.g. layers).

The remote viewer may select beforehand a certain profile which defines how players are presented. For example, it is possible that a favorite player is highlighted while the location and posture of "less-important" players (e.g. who are far away from the ball) is updated less frequently. Both two dimensional and three dimensional views are possible and can be changed on the fly if it is supported by the service provider. Match facts (goals, bookings etc.) are updated automatically on the screen. The facts can be received through standard sport reporting systems or through a person designated to be responsible for match presentations.

The mobile stations in the wireless network can be phone units configured to receive and display information. These display capabilities may support any suitable wireless transmission standard or proprietary system or may include a web browser, such as Netscape Navigator or Microsoft Internet Explorer, supporting a standardized or proprietary Internet streaming technology. They may also be laptop computers or communicator-like terminals with Internet access, in which case the above-mentioned internet transmission methods can be used over the wireless network. Such a device preferably is able to carry out all of the server control functions of a client discussed below as well as the communication protocols to set-up connection. In particular, a remote access system is included so that the mobile phone or other terminal equipment can be remotely accessed by control signals included in the digital service information to, for example, turn the equipment on and off or at least contact the equipment while it is operating is a suspended mode of operation. The display can be a fixed station (e.g., a desktop computer) or part of a mobile station.

In one possible embodiment, the client may be a set-top box, video game console or the like capable of generating a VRML-like display using pre-stored graphical representations of players for a more realistic effect. For example, with modifications, the invention could be practiced in conjunction with a Sega Dreamcast console containing a modem. The data signal is modified so that it conforms to the internal format of the video game and relies upon the advanced modeling circuitry of the video game console.

The client equipment preferably also has content controls which permit the client to select a clip of a data signal to be displayed. In particular, the controls permit the client to control the display by selecting functions of PLAY, STOP, REWIND, FORWARD, FAST FORWARD and FAST REWIND in much the same manner as a video cassette recorder. In addition, the client can control the display information by reference to a time line or time stamp information associated with the data. The controls may also allow the client to designate a time lapse loop. Of course, the client is configured to decode and demultiplex the data signal into its audio, video and time stamp components and display continually as the data signal is being received.

### Graphic Display

One example of the graphic display according to the invention is presented in Fig. 3. It shows a fictional soccer match between Chelsea and Manchester United. The remote viewer has selected Forssell, Zola, and Beckham as his favorite players and they are 15 highlighted so it is easier to follow them in the field. The display shows a free kick and the ball is depicted as small black ball (smaller balls indicate the previous locations of the ball in order to show the spin of the shot) . Arrows indicate directions of objects. A separate scoreboard is constantly updated and the user can click on banners and other advertisements on the display for more information.

While the foregoing has described what are considered to be example embodiments of the invention, it is understood that various modifications may be made therein and that the invention may be implemented in various forms and embodiments, and that it may be applied in numerous applications, only some of which have been described herein. It is intended by the following claims to claim all such modifications and variations.

## Claims

1. A method of providing a graphical representation of a sporting event to a viewer at a remote location by transmitting data generated in accordance with the event to the remote location, comprising:
capturing information concerning the location and motion of a plurality of objects in the sporting event;
analyzing the captured information and generating a data signal describing the location and motion of said plurality of objects in the sporting event;
transporting the data signal to the remote location via a low bandwidth communication link; and
displaying a graphical representation of the sporting event at the remote location in accordance with the data signal.

2. The method recited in claim 1, wherein the data signal is transmitted to the remote location through a wireless network.

3. The method recited in claim 2, wherein the data signal is transferred in the form of IP data packets.

4. The method recited in claim 3, wherein the IP data packets are transferred using RTP/UDP/IP protocol formats.

5. The method recited in claim 3, wherein the IP data packets are multicast to a plurality of remote locations.

6. The method recited in claim 2, wherein the objects correspond to individual players in the sporting event.

7. The method recited in claim 6, wherein the graphical representation includes a respective symbol for each one of the respective players in the sporting event.

8. The method recited in claim 1, wherein the graphical representation is refreshed in real-time.

9. The method recited in claim 8, wherein the graphical representation includes the location and motion of at least one player in the sporting event.

10. A communications system providing a graphical representation of a sporting event to a remote location, said system comprising:
devices located at said sporting event and configured to capture the location and/or position of objects in the sporting event;
a server analyzing the captured information and generating a data signal describing the location and motion of said plurality of objects in the sporting event;
a communication facility transporting the data signal to the remote location via a low bandwidth communication link; and
terminal equipment at the remote location displaying a graphical representation of the sporting event in accordance with the data signal.

11. The communications system recited in claim 10, wherein the terminal equipment is provided with client software for setting up a session with said server.

12. The communications system recited in claim 11, wherein the client terminal includes a storage medium for storing a time portion of said data signal.

13. The communications system recited in claim 12, wherein the terminal equipment permits the user to select and play back said time portion of said data signal.

14. The communications system recited in claim 13, wherein the data signal includes data packets having time stamps indicating the time at which said data was captured.

15. The communications system recited in claim 14, wherein the data packets indicate the location and/or posture of players in said sporting event.

16. The communication system recited in claim 14, wherein the data packets are transferred using RTP/UDP/IP protocol formats.

17. The comunication system recited in claim 14, wherein the data packets are multicast to a plurality of remote locations.

18. The communication system recited in claim 14, wherein the data packets are multicast over a digital television system.
